(19) Europäisches Patentamt
European Patent Office
Office européen des brevets

(11) **EP 2 178 280 A1**

(12) **EUROPEAN PATENT APPLICATION**

(43) Date of publication:
21.04.2010 Bulletin 2010/16

(51) Int Cl.:
*H04M 1/60* (2006.01)          *H04R 5/04* (2006.01)
*H04R 29/00* (2006.01)

(21) Application number: 08166932.7

(22) Date of filing: 17.10.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: Sony Ericsson Mobile
Communications AB
221 83 Lund (SE)

(72) Inventors:
• **Norhammar, Björn**
**SE-182 74, Stocksund (SE)**
• **Hultman, Michael**
**SE-122 66, Enskede (SE)**

(74) Representative: **Valea AB**
**Box 7086**
**103 87 Stockholm (SE)**

(54) **Arrangement and method for determining operational mode of a communication device**

(57)     The invention relates to a wireless electronic arrangement (100) arranged to position the wireless electronic arrangement in an operational mode. The wireless electronic arrangement is arranged to be connected to an earphone arrangement arranged to be in an active state or an non-active state. The wireless electronic arrangement (100) comprises an electric signal generator (104) arranged to generate a second electric signal to be sent over the earphone arrangement (20). The wireless electronic arrangement further comprises a measuring arrangement (105) adapted to make at least one measurement on the second electric signal to determine a second value indicating a second acoustic impedance of the earphone arrangement. The wireless electronic arrangement furthermore comprises a control unit (101) arranged to compare the second value with a first value indicating a first acoustic impedance stored on a memory unit (107) and based on the comparison to determine the state of the earphone arrangement. The control unit (101) is then arranged to change operational mode of the wireless electronic arrangement based on the determined state of the earphone arrangement.

Figure 1A

Figure 1B

**Description**

TECHNICAL FIELD

The invention relates to a method and an arrangement in a communications network, in particular, for determining operational mode of the arrangement.

BACKGROUND

In the field of wireless electronic devices there is continuously an increase of applications and features to enhance the functionality of the wireless electronic devices. In order to facilitate the operation of the wireless electronic devices earphones have been provided for enhancing the media experience as well as to facilitate the hands free function. As the earphones are plugged into the wireless electronic device the internal back speakers are disabled and the sound is transmitted via the earphones to the user. However, whether the earphones are used or not is not determined.

SUMMARY

It is a desire of embodiments disclosed herein to provide a method for enhancing the operation of a wireless electronic arrangement.

Embodiments disclose a wireless electronic arrangement arranged to detect a state of an earphone arrangement connected to the wireless electronic arrangement in order to determine operational mode of the wireless electronic arrangement. The earphone arrangement is enabled to be in at least two states, an active state and a non-active state.

The wireless electronic arrangement further comprises an electric signal generator arranged to generate a second electric signal to be sent over the earphone arrangement. The wireless electronic arrangement then comprises a measuring arrangement adapted to make at least one measurement on the second electric signal to determine a second value indicating a second acoustic impedance of the earphone arrangement.

Furthermore, a control unit is comprised in the wireless electronic arrangement configured to compare the second value with a first value indicating a first acoustic impedance stored on a memory unit and based on the comparison to determine the state of the earphone arrangement.

The control unit is then further arranged to determine and set up operational mode of the wireless electronic arrangement based on the determined state of the earphone arrangement.

In some embodiments, a method in a wireless electronic arrangement for determining operational mode of the wireless electronic arrangement is provided. The wireless electronic arrangement is connected to an earphone arrangement. The earphone arrangement is enabled to be in at least two states and active state and a non-active state. The wireless electronic arrangement generates a second electric signal and sends the second electric signal to the earphone arrangement. The second signal is then measured resulting in a measured value and based on the measured value a second value indicating a second impedance of the earphone arrangement is determined.

The wireless electronic arrangement is arranged to determine a state of the earphone arrangement based on a comparison of the determined second value compared with a first value indicating a first impedance of the earphone arrangement.

Based on the determined state of the earphone arrangement the wireless electronic arrangement is set into an operational mode.

Embodiments are disclosed providing detection if the ear piece is in the ear or not and upon determination sets the communication device in an operation mode based on the determination, resulting in a facilitated operation of the communication device.

BRIEF DESCRIPTION OF THE DRAWINGS

Embodiments will now be described in more detail in relation to the enclosed drawings, in which:

Figure 1A discloses a schematic overview of a communication device of a user,
Figure 1B shows a schematic overview of a communication device of a user,
Figure 2 shows a schematic overview of a measuring arrangement in an electronic arrangement,
Figure 3 shows a schematic overview of an embodiment of a wireless electronic arrangement,
Figure 4 shows a schematic overview of an impedance Z curve relative frequency f of a speaker,
Figure 5 shows a schematic overview of a method in a wireless electronic arrangement, and
Figure 6 shows a schematic overview of a wireless electronic arrangement.

DETAILED DESCRIPTION OF EMBODIMENTS

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

The present invention is described below with reference to block diagrams and/or flowchart illustrations of methods, apparatus (systems) and/or computer program products according to embodiments of the invention. It is understood that several blocks of the block diagrams and/or flowchart illustrations, and combinations of blocks in the block diagrams and/or flowchart illustrations, can be implemented by computer program instructions. These computer program instructions may be provided to a processor of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks.

These computer program instructions may also be stored in a computer-readable memory that can direct a computer or other programmable data processing apparatus to function in a particular manner, such that the instructions stored in the computer-readable memory produce an article of manufacture including instructions which implement the function/act specified in the block diagrams and/or flowchart block or blocks.

The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions/acts specified in the block diagrams and/or flowchart block or blocks.

Accordingly, the present invention may be embodied in hardware and/or in software (including firmware, resident software, micro-code, etc.). Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

The present invention is described herein as employed in and with a wireless electronic arrangement. In the context of the invention, the wireless electronic arrangement may e.g. be a mobile phone, a PDA (Personal Digital Assistant), any other type of portable computer, such as a laptop computer. It may also be an arrangement of a mobile device with a separated headset, such as a Bluetooth headset or the like.

A control unit may be a single (central) processing unit, a plurality of processor, and or the like.

A memory unit may be a single memory unit, a plurality of memory units, for example, internal and/or external memory units, and/or the like.

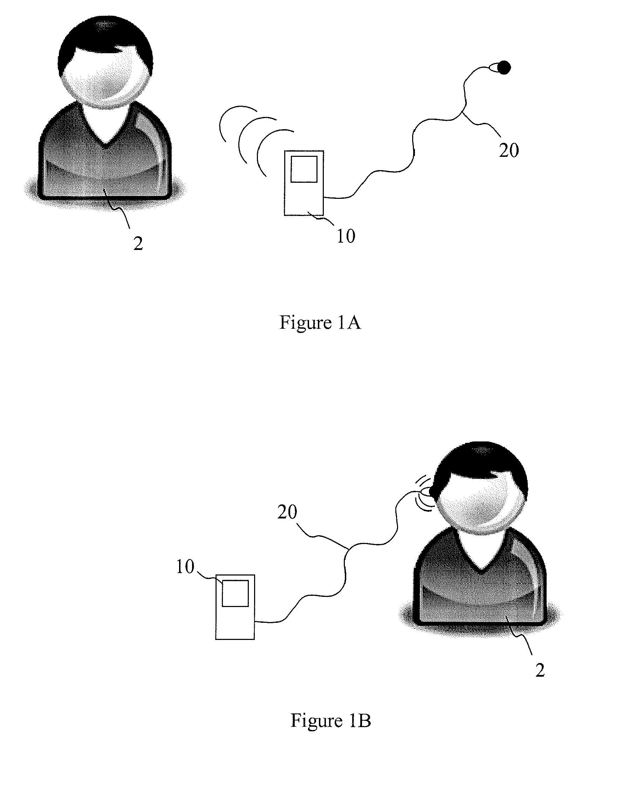

In figures 1A-1B, schematic overviews of a user 2 with a mobile device 10 are shown.

In figure 1A, the mobile device 10 comprises an earphone arrangement 20 that is not plugged into the ear of the user 2. The mobile device 10 is in an operational mode wherein incoming calls generate an output signal in a speaker arrangement within the mobile device 10.

In figure 1B, the mobile device 10 of the user 2 detects a change in the impedance over the earphone arrangement as the earphone arrangement 20 is plugged into the ear of the user 2 as volume around the speaker membrane of the earphones is changed. As a result the communication device 10 switches to another operational mode, wherein incoming calls generate an output signal in the earphone arrangement 20.

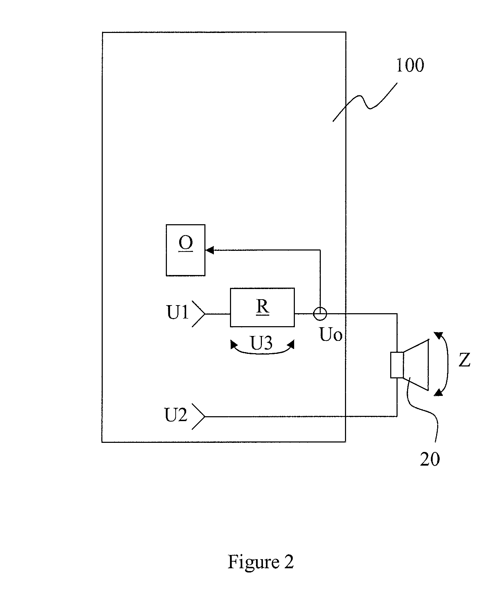

In figure 2, a schematic overview of a measuring arrangement in an electronic arrangement is shown.

The measuring arrangement comprises a resistor R, for example, a shunt resistor, and a reading unit O arranged to read the measuring value after the resistor R in order to determine the acoustic impedance Z over the earphone arrangement 20. It should here be understood that the measured values indicate the electric impedance and the acoustic impedance is included into the electric impedance.

$$U3 = R*I, \text{ Measured } U3 = U1-Uo; + \text{ known } R \text{ gives: } I = (U1-Uo)/R;$$

Hence,

$$Z = (Uo-U2)/((U1-Uo)/R)$$

where,
U1= Voltage at point 1
U2= Voltage at point 2
U3= Voltage over the resistor
R= Resistor value of the resistor
Uo= Read voltage at point O

It should be understood that the read value may be a different unit, such as current and/or the like.

The arranging of a shunt resistor in order to measure impedance Z results in a wireless electronic arrangement enabled to detect whether one or both earphones are plugged into the ear/s of a user. Then, when it is determined that the earphone arrangement 20 is in active state, that is, plugged into the ear, the operational mode of the wireless electronic arrangement is changed. For example, the wireless electronic arrangement changes from an operational mode using speaker in the wireless electronic arrangement to an operational mode using the speaker/s in the earphones.

In some cases, the control unit, based on the determined state, may change the executing logic from a first logic to a second logic. The different operational modes may be, for example, to change from a logic that illuminates the wireless electronic arrangement when an incoming call is received to a logic that does not illuminate the wireless electronic arrangement to reduce power consumption when the earphone arrangement is plugged into the ear, changing output speaker/vibrator arrangement, changing the execution of an application to pause the application, and/or the like.

The acoustic impedance is the acoustic resistance the speaker gets from the surroundings. The electric impedance that is measured comprises the electric impedance from a wire in the earphone arrangement and a component from the acoustic impedance.

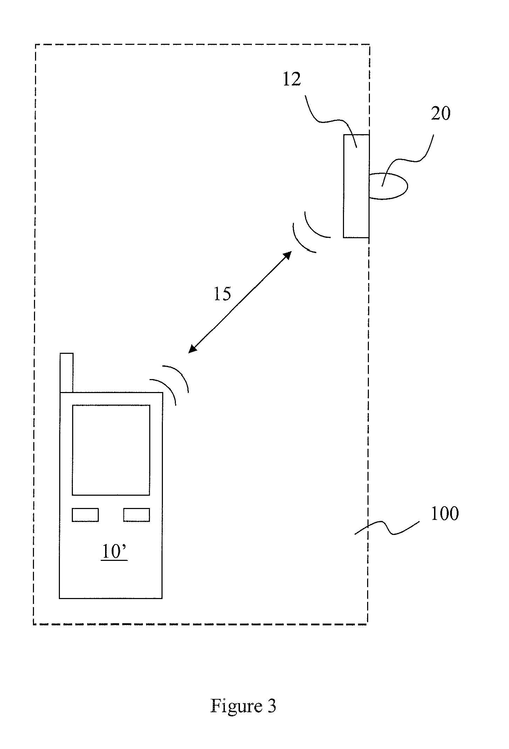

In figure 3, a schematic overview of an embodiment of a wireless electronic arrangement 100 is shown.

The wireless electronic arrangement 100 comprises an intermediate device 12 wirelessly connected and communicating wirelessly 15 with the casing part 10' of the wireless electronic arrangement 100. The units 10', 12 may communicate using Bluetooth protocols, IR, and/or the like.

The intermediate device 12 comprises an electric signal generator generating low amplitude acoustic signals and a measuring arrangement arranged to make measurements on the generated signals. Connected to the intermediate device 12 is an earphone arrangement 20, and in order to determine whether the casing unit 10' should generate sound when an incoming call is received or the sound is generated in the earphone arrangement 20, the intermediate device 12 performs measurements on generated signals and compares the measured result with previously stored/measured values of previous signals. The comparing may be performed in the intermediate device and/or the control unit of the casing unit 10'. Similarly, the control unit in the casing unit 10' may determine based on data sent from the intermediate device 12, for example, measurement data, comparing impedance data, and/or the like, to change operational mode of the wireless electronic arrangement 100.

The intermediate device 12 may, in some embodiments, be an adapter, a Bluetooth headset, and/or the like.

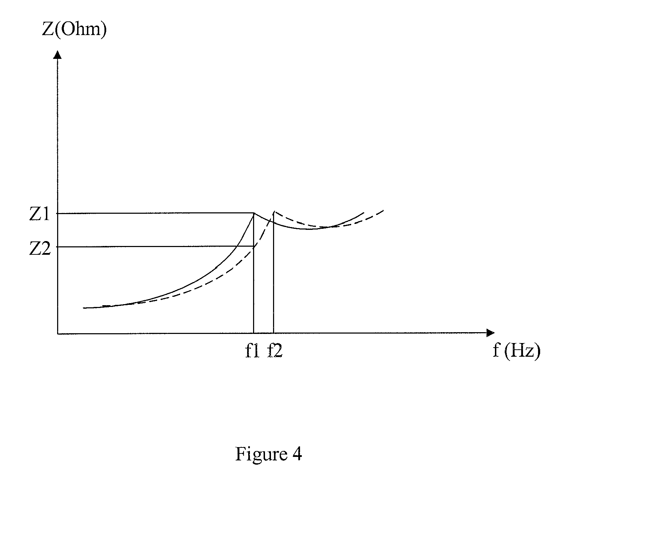

In figure 4, a schematic overview of an impedance Z curve relative frequency f of a speaker in an earphone arrangement is shown.

As shown, a first curve C1 illustrates the impedance change over different frequencies. A small impedance top Z1 is shown due to a membrane of the speaker. The frequency of this impedance top is called resonance frequency f1 of the speaker. The electric impedance of the wire etc in the speaker follows a linear curve and the top of the curve is the addition of the acoustic impedance of the speaker.

As the volume around the speaker changes, the impedance of the speaker changes.

The wireless electronic arrangement is arranged to generate a second electric acoustic signal and based on measurements on the second signal, second impedance over the speaker of the earphone arrangement is determined. The impedance Z over a speaker changes as the volume around the membrane of the speaker changes, and as the volume around the speaker gets smaller in the case of plugging it in to an ear the impedance curve C2 of the speaker changes. Hence, the resonance frequency changes and so does the impedance readings of different frequencies. In the illustrated embodiment, impedance of the first resonance frequency f1 has changed to a second impedance value Z2 and the resonance frequency has changed to a second resonance frequency f2.

Hence, in some embodiments, in order to determine state of the earphone arrangement the first impedance value Z1 is compared to the second impedance value Z2 of the same frequency f1. In some embodiments, the second resonance frequency f2 is determined and compared to the first resonance frequency f1.

Based on the difference from the original values, that is, Z1 and/or f1, it is determined whether the earphones are plugged in or not. In some embodiments, the Z and/or f values have to differ by a range of 10 percent or more.

A wireless electronic arrangement comprises a mobile phone, a PDA, a wireless device with a wireless headset, a portable media player, and/or the like.

It should be noted that the first value may be set as a range of values, that is, the second value need to be over a limit value or below a limit value in order for the operational mode to change.

It should be understood that the first value of the impedance may be, for example, predetermined from statistics taken of a number of different earphones in a testing facility, determined upon installation of the earphones whenever plugged in, initiated by a user from a settings menu, and/or the like.

An installation guide may be ran when the wireless electronic arrangement detects that earphones have been plugged into the wireless electronic arrangement, instructing the user to put the earphones on a surface with the membrane away from the surface and/or instructing the user to put earphones into the ear. Hence, in some embodiments, the first (reference) value is determined on earphones not used and, in some embodiments, the first (reference) value is determined on earphones used. It should also be understood that in some embodiments both used and not used values may be used to determine the state of the earphone arrangement.

In the embodiments, wherein the wireless electronic arrangement determines the first impedance value, a first acoustic signal is generated and sent through the earphone arrangement. The first impedance is then measured and stored. In some embodiments, a plurality of signals is generated and impedances are measured in order to determine an impedance curve and from the curve a resonance frequency is determined. As the curve is rather pointy around the resonance frequency, the difference of the impedance value will be rather easy to detect as the curve travels from the originating position around the resonance frequency.

In some embodiments, the difference of the first and second impedance is determined by comparing the impedance values of the resonance frequency of the first signal. If the difference is being more than a preset value, if the difference is being outside a certain range, it is determined that the earphones has been plugged in and a change of operational mode is desirable.

In some embodiments, the difference of the first and second impedance is determined by comparing the resonance frequencies of the first and second signals.

It should be understood that the earphone arrangement may in some embodiments comprise two earphones and it may be determined whether one or two of the earphones are plugged in. This may be used to change to an operational mode using both the earphone and the internal speaker of the electronic arrangement

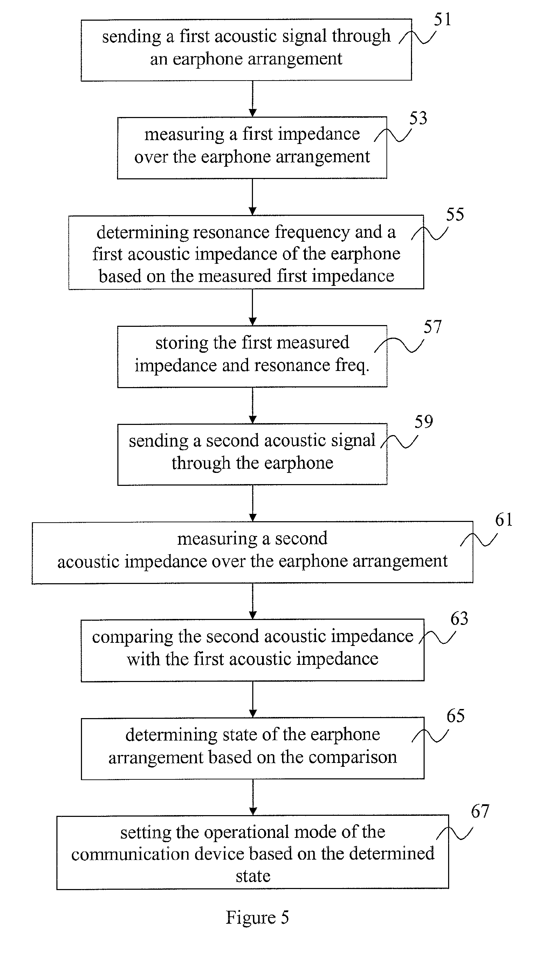

In figure 5, a schematic overview of a method in a wireless electronic arrangement is shown.

In optional step 51, the wireless electronic arrangement sends a first electronic signal through an earphone arrangement connected to the wireless electronic arrangement. This may be performed automatically as the earphones are plugged in, manually initiated and/or the like.

In optional step 53, the wireless electronic arrangement measures a first value indicating a first impedance over the earphone arrangement. It should here be noted that the first value may be an electric measured value related to the first impedance of the earphone arrangement, such as a current, a voltage and/or the like.

In additional optional step 55, the wireless electronic arrangement determines a first resonance frequency and/or a first acoustic impedance of the earphone arrangement based on the measured first value.

In optional step 57, the wireless electronic arrangement stores the first resonance frequency and/or the first acoustic impedance. It should here be understood that in some embodiments the first resonance frequency and/or the first acoustic impedance comprises predetermined range values based on a plurality of tests performed on earphone arrangements that are inserted during installation of a program in the wireless electronic arrangement, such as when plugging the earphone arrangement to the wireless electronic arrangement and/or the like.

In step 59, the wireless electronic arrangement sends a second electric acoustic signal through the earphone arrangement. The second electric signal may, in some embodiments, comprise a signal of very small amplitude and/or of the first resonance frequency.

It should be understood that the wireless electronic arrangement may be arranged to generate a plurality of signals to determine the resonance frequency of the second state of the earphone arrangement.

In some embodiments, the second electric signal may be sent on an event basis. That is, triggered to be sent when certain criterion/a is/are met such as earphones are plugged in the wireless electronic arrangement, an incoming call is received, a multimedia application is initiated, an accelerometer in a headset detecting movement and/or the like. Consequently, a trigger command is sent to the main casing unit. The second signal may also be continuously sent in a certain frequency, such as one signal every 15 seconds, manually activated from a menu, and/or the like.

In step 61, the wireless electronic arrangement measures the generated signal resulting in a second value indicating a second acoustic impedance over the earphone arrangement. The measured value may comprise a current, a voltage and/or the like.

In step 63, the wireless electronic arrangement compares the second acoustic impedance with the first acoustic impedance.

In step 65, the wireless electronic arrangement determines a state of the earphone arrangement based on the result of the compared impedances. The ear phone arrangement is enable to be in at least two states, an active mode and a non-active mode.

The active mode indicates that the earphone arrangement is in use, for example, plugged into an ear, and the non-active state indicates that the earphone arrangement is not in use, for example, not plugged into the ear.

In step 67, the wireless electronic arrangement place itself in an operational state based on the determined state of the earphone arrangement. For example, if the earphone arrangement is determined to be in an active state the operational mode comprises to activate functions in the earphone arrangement, such as, output speaker and input microphone in the earphone arrangement and the corresponding functions in the wireless electronic arrangement are switched off. If the earphone arrangement is determined to be in an non active state the wireless electronic arrangement may be set in an operational mode disregarding that the earphone arrangement is connected to the wireless electronic arrangement.

In order to perform the method a wireless electronic arrangement is provided.

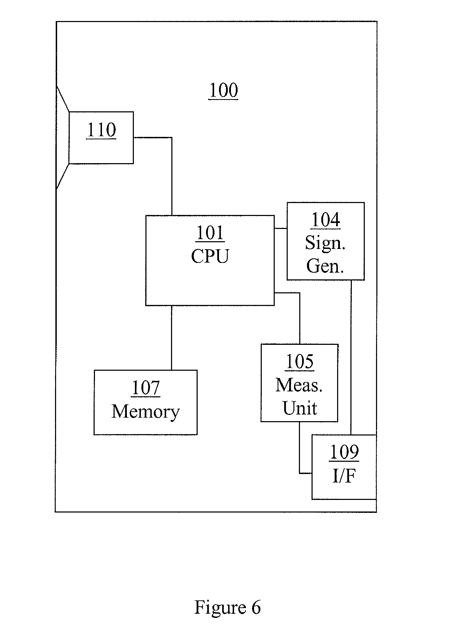

In figure 6, a schematic overview of a wireless electronic arrangement 100 is shown.

A wireless electronic arrangement may comprise a mobile phone, a PDA, an mp3-player, a combined mobile phone and a Bluetooth headset, and/or the like.

The wireless electronic arrangement 100 is arranged to detect a state of an earphone arrangement 20 connected to the wireless electronic arrangement 100. The earphone arrangement 20 is enabled to be in at least two states, an active state and a non-active state. The active state is indicating that the earphone arrangement is plugged into an ear or into a confined volume.

The wireless electronic arrangement 100 further comprises an electric signal generator 104 arranged to generate a second electric signal, such as an electric acoustic signal of low amplitude or the like, to be sent over the earphone arrangement 20. The wireless electronic arrangement 100 may further comprise a measuring arrangement 105 adapted to make at least one measurement on the second electric signal to determine a second value indicating a second acoustic impedance of the earphone arrangement.

The triggering of generating the second acoustic signal may be a preset trigger state, such as initiation of a media application, detecting movement of the earphone arrangement or an intermediate device comprising an accelerometer, such as a Bluetooth headset, an incoming call, connecting the earphone arrangement to the wireless electronic arrangement, manually triggered by the user, and/or the like.

The second acoustic signal may also be generated continuously in a frequency, for example, every ten second all the time, as long as an application is running, and/or the like.

In addition, the wireless electronic arrangement comprises a control unit 101 arranged to compare the second value with a first value indicating a first acoustic impedance that may be stored on a memory unit 107, and based on the comparison to determine the state of the earphone arrangement. In some embodiments, the first value and the second value comprise an impedance value and/or a resonance frequency value.

In some embodiments, the control unit 101 may be arranged to determine the state of the earphone arrangement based on the range of difference between the first and the second values.

In some embodiments, the first value indicating the first acoustic impedance comprises a predetermined impedance value stored in the memory unit 107 based on a type of earphone arrangement. For example, certain types of earphones have a first value and different earphones have a different first value. These values may be pre-programmed, transmitted, stored during installation of the earphone arrangement in the wireless electronic device, and/or the like.

The control unit 101 is further arranged to determine operational mode of the wireless electronic arrangement based on the determined state of the earphone arrangement. For example, if the control unit 101 determines that the earphone arrangement is in an active state speakers in the wireless electronic arrangement 10 are turned off and a vibrator function and the speakers of the earphone arrangement are activated. Other operational feature associated to an operational mode may be to pause a media application when it is determined that the earphone arrangement is in a non active state. Another one is that a notifying signal, such as a ring signal or the like, may be controlled/led to the back speaker when the earphone arrangement is in a non- active state and controlled/led/fed to the earphone arrangement when the earphone arrangement has been determined to be in an active state.

In some embodiments, the electric signal generator 104 is further arranged to generate a first electric signal to be sent of the earphone arrangement and the measuring arrangement 105 is adapted to make measurements for the control unit 101 to determine the first value indicating the first acoustic impedance of the earphone arrangement.

This first measuring process may be arranged to make a plurality of measurements of a plurality of signals in order for the control unit 101 to determine resonance frequency and acoustic impedance of the resonance frequency of the first electric signal.

The signal generator 104 may, in some embodiments, be arranged to send the second electric signal with a resonance frequency of a first electric signal.

The control unit 101 may be arranged to determine a second resonance frequency based on the measurements and to compare the second resonance frequency with the first value indicating the first acoustic impedance wherein the first value indicates a first resonance frequency.

In some embodiments, such as a mobile phone with a Bluetooth headset, the measuring arrangement 105 and the signal generator 104 is comprised in a separated housing, an intermediate device, for example, the Bluetooth headset or the like. The separated housing is communicatively connected to the control unit 101 for the control unit 101 to determine operational mode of the wireless electronic device 10.

The measuring arrangement 105 may comprise a resistor R, such as a shunt resistor, and a reading unit O, such as a voltage meter or the like.

In an overview of the method performed by the wireless electronic arrangement, the method comprises a wireless electronic device that generates a second electric signal and sends the second electric signal to the earphone arrangement. The second electric signal is measured and a second value indicating a second impedance of the earphone arrangement is determined based on the measured value.

The wireless electronic arrangement compares the second value with a first value indicating a first impedance of the earphone arrangement and determines a state of the earphone arrangement based on the comparison. The earphone arrangement is enabled to be in at least two states, an active state and a non-active state.

Based on the determined state of the earphone arrangement the wireless electronic arrangement then sets itself up into an operational mode.

In some optional embodiments the method further comprises to determine the first value indicating a first impedance of the earphone arrangement. This may be determined by generating a first electronic signal and sending the first electronic signal to the earphone arrangement. The wireless electronic arrangement measures a value of the first electric signal and determines the first value indicating the first impedance of the earphone arrangement based on the measured value.

In the drawings and specification, there have been disclosed exemplary embodiments of the invention. However, many variations and modifications can be made to these embodiments without substantially departing from the principles of the present invention. Accordingly, although specific terms are employed, they are used in a generic and descriptive sense only and not for purposes of limitation, the scope of the invention being defined by the following claims.

## Claims

1. A wireless electronic arrangement (10) arranged to detect a state of an earphone arrangement (20) connected to the wireless electronic arrangement (10) enabled to be in at least two states, an active state and a non-active state, in order to determine operational mode of the wireless electronic arrangement wherein the wireless electronic arrangement (10) comprises an electric signal generator (104) arranged to generate a second electric signal to be sent over the earphone arrangement (20), a measuring arrangement (105) adapted to make at least one measurement on the second electric signal to determine a second value indicating a second acoustic impedance of the earphone arrangement, and a control unit (101) arranged to compare the second value with a first value indicating a first acoustic impedance stored on a memory unit (107) and based on the comparison to determine the state of the earphone arrangement; the control unit (101) is further arranged to determine operational mode of the wireless electronic arrangement based on the determined state of the earphone arrangement.

2. A wireless electronic arrangement according to claim 1, wherein the electric signal generator (104) is further arranged to generate a first electric signal to be sent over the earphone arrangement and the measuring arrangement (105) is adapted to make at least one measurement on the first electric signal for the control unit (101) to determine the first value indicating the first acoustic impedance of the earphone arrangement.

3. A wireless electronic arrangement according to claim 2, wherein the measuring arrangement (105) is arranged to make a plurality of measurements of a plurality of first signals and the control unit (101) is arranged to determine resonance frequency and acoustic impedance of the resonance frequency of the first electric signal.

4. A wireless electronic arrangement according to any of the claims 1-3, wherein the second electric signal is arranged to be triggered to be sent by a preset trigger state.

5. A wireless electronic arrangement according to claim 4, wherein the preset trigger state is a preset event, such as an incoming call, starting a media application, and/or the like.

6. A wireless electronic arrangement according to any of the claims 1-5, wherein the second electric signal is continuously generated in a preset frequency.

7. A wireless electronic arrangement according to any of the claims 1-6, wherein the first value indicating a first acoustic impedance and the second value indicating a second acoustic impedance comprise a impedance value and/or a resonance frequency value.

8. A wireless electronic arrangement according to any of the claims 1-7, wherein the first value indicating the first acoustic impedance comprises a predetermined impedance value stored in the memory unit (107) based on a type of earphone arrangement.

9. A wireless electronic arrangement according to any of the claims 1-8, wherein the signal generator (104) is arranged to send the second electric signal with a resonance frequency of a first electric signal.

10. A wireless electronic arrangement according to any of the claims 1-9, wherein the control unit (101) is arranged to determine a second resonance frequency based on the at least one measurement and to compare the second resonance frequency with the first value indicating the first acoustic impedance wherein the first value indicates a first resonance frequency.

11. A wireless electronic arrangement according to any of the claims 1-10, wherein the measuring arrangement (105) and the signal generator (104) are comprised in a separate housing (12) separated from a main casing (10') comprising the control unit (101) and communicatively connected to each other.

12. A wireless electronic arrangement according to any of the claims 1-11, wherein the measuring arrangement (105) comprises a resistor (R) and a reading unit (O).

13. A wireless electronic arrangement according to any of the claims 1-12, wherein the control unit is arranged to determine the state of the earphone arrangement based on the range of difference between the first and the second values.

14. A wireless electronic arrangement according to any of the claims 1-13, wherein active state indicates that the earphone arrangement is in a state of being plugged into a confined volume.

15. A mobile phone comprising a wireless electronic arrangement according to any of the claims 1-14.

16. A method in a wireless electronic arrangement for determining operational mode of the wireless electronic arrangement with a earphone arrangement connected to the wireless electronic arrangement, the method comprises the steps of,

   - generating a second electric signal and sending (59) the second electric signal to the earphone arrangement,
   - measuring (61) a value of the electric signal and determining a second value indicating a second impedance of the earphone arrangement based on the measured value,
   - comparing (63) the second value with a first value indicating a first impedance of the earphone arrangement,
   - determining (65) a state of the earphone arrangement based on the comparison, wherein the earphone arrangement is enabled to be in at least two states, an active state and a non-active state, and
   - setting up (67) the wireless electronic arrangement into an operational mode based on the determined state.

17. A method according to claim 16, comprising the steps of,

   - generating a first electronic signal,
   - sending (51) the first electronic signal to the earphone arrangement,
   - measuring (53) a first value of the first electric signal, and
   - determining (55) the first value indicating the first impedance of the earphone arrangement based on the measured value.

Figure 1A

Figure 1B

Figure 2

Figure 3

Figure 4

Figure 5

Figure 6

Europäisches Patentamt

European Patent Office

Office européen des brevets

**EUROPEAN SEARCH REPORT**

Application Number

EP 08 16 6932

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2008/000304 A (SONY ERICSSON MOBILE COMM AB [SE]; HANSSON MAGNUS [SE]) 3 January 2008 (2008-01-03) * page 1, line 4 - line 16 * * page 1, line 31 - page 3, line 30 * * page 4, line 3 - page 6, line 16 * * figures 1-3 * | 1-17 | INV. H04M1/60 H04R5/04 H04R29/00 |
| Y | EP 1 496 670 A (MATSUSHITA ELECTRIC IND CO LTD [JP]) 12 January 2005 (2005-01-12) * paragraph [0012] - paragraph [0017] * * paragraph [0022] * * paragraph [0024] * * paragraph [0027] * * paragraph [0034] - paragraph [0036] * * paragraph [0049] - paragraph [0051] * * paragraph [0068] - paragraph [0077] * * paragraph [0095] * * figures 2A-2B,5 * | 1-17 | |
| A | EP 1 523 218 A (SONY ERICSSON MOBILE COMM AB [SE]) 13 April 2005 (2005-04-13) * paragraph [0001] * * paragraph [0006] - paragraph [0011] * * paragraph [0016] * * paragraph [0022] * * paragraph [0027] * * paragraph [0029] * * paragraph [0031] * * paragraph [0036] - paragraph [0038] * * figure 1 * | 1,3,7,9, 10,12, 15,16 | TECHNICAL FIELDS SEARCHED (IPC) H04M H04R |

-/--

The present search report has been drawn up for all claims

| Place of search | Date of completion of the search | Examiner |
|---|---|---|
| Munich | 4 March 2009 | Banerjea, Robin |

EPO FORM 1503 03.82 (P04C01)

Europäisches
Patentamt
European
Patent Office
Office européen
des brevets

**EUROPEAN SEARCH REPORT**

Application Number

EP 08 16 6932

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/029234 A1 (SARGAISON STEWART [US]) 9 February 2006 (2006-02-09)<br>* paragraph [0002] *<br>* paragraph [0005] *<br>* paragraph [0008] - paragraph [0010] *<br>* paragraph [0023] - paragraph [0026] *<br>* paragraph [0029] *<br>* paragraph [0032] - paragraph [0036] *<br>* paragraph [0043] - paragraph [0048] *<br>* figures 1-6 *<br>----- | 1,4-6, 13-16 | |

TECHNICAL FIELDS
SEARCHED (IPC)

The present search report has been drawn up for all claims

| Place of search | Date of completion of the search | Examiner |
|---|---|---|
| Munich | 4 March 2009 | Banerjea, Robin |

EPO FORM 1503 03.82 (P04C01)

## ANNEX TO THE EUROPEAN SEARCH REPORT
## ON EUROPEAN PATENT APPLICATION NO.

EP 08 16 6932

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2009

| Patent document cited in search report | | Publication date | Patent family member(s) | | Publication date |
|---|---|---|---|---|---|
| WO 2008000304 | A | 03-01-2008 | US 2007297634 A1 | | 27-12-2007 |
| EP 1496670 | A | 12-01-2005 | AU 2003236003 A1 | | 20-10-2003 |
| | | | WO 03085939 A1 | | 16-10-2003 |
| | | | JP 3629490 B2 | | 16-03-2005 |
| | | | US 2005141696 A1 | | 30-06-2005 |
| EP 1523218 | A | 13-04-2005 | NONE | | |
| US 2006029234 | A1 | 09-02-2006 | NONE | | |

EPO FORM P0459

For more details about this annex : see Official Journal of the European Patent Office, No. 12/82